(19) Europäisches Patentamt
European Patent Office
Office européen des brevets

(11) **EP 3 844 534 B1**

(12) **EUROPEAN PATENT SPECIFICATION**

(45) Date of publication and mention
of the grant of the patent:
**17.01.2024 Bulletin 2024/03**

(21) Application number: **19759772.7**

(22) Date of filing: **29.07.2019**

(51) International Patent Classification (IPC):
**G02B 3/04** $^{(2006.01)}$     **G02B 27/58** $^{(2006.01)}$
**G01J 3/02** $^{(2006.01)}$     **G01J 5/0806** $^{(2022.01)}$

(52) Cooperative Patent Classification (CPC):
**G02B 3/04; G01J 3/0208; G01J 5/0806;**
**G02B 27/58;** G02B 21/33

(86) International application number:
**PCT/US2019/043966**

(87) International publication number:
**WO 2020/046516 (05.03.2020 Gazette 2020/10)**

(54) **SOLID-IMMERSION LENS FOCAL PLANE ARRAY**

FESTKÖRPERIMMERSIONSLINSEN-BRENNEBENENANORDNUNG

VIDÉO-DÉTECTEUR RÉSEAU À LENTILLE À IMMERSION SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2018 US 201816114356**

(43) Date of publication of application:
**07.07.2021 Bulletin 2021/27**

(73) Proprietor: **Raytheon Company**
**Waltham, MA 02451-1449 (US)**

(72) Inventors:
- **BEVERSLUIS, Michael, R.**
**Tucson, AZ 85750 (US)**
- **ODOM, Garret, A.**
**Tucson, AZ 85750 (US)**

(74) Representative: **Carpmaels & Ransford LLP**
**One Southampton Row**
**London WC1B 5HA (GB)**

(56) References cited:
**US-A- 5 912 765**     **US-A1- 2004 036 980**
**US-A1- 2004 130 311**     **US-A1- 2007 046 947**
**US-A1- 2015 185 474**

**Description**

BACKGROUND

The present invention relates to focal plane arrays, and more particularly to a solid-immersion lens focal plane array. Focal plane arrays are light-sensing devices including an array of pixels. Each pixel in the array of pixels includes a photosensor configured to sense light and output a current or voltage indicative of the sensed light. The current output by each photosensor in the array of pixels may be analyzed to determine properties of the sensed light, and analyzed to determine a complete image sensed by the focal plane array.

US2004/130311 A1 discloses a passive mm-wave imager comprising an optical immersion lens arrangement which is illuminated by front end optics and an array of direct detectors located in the focal plane of the immersion lens arrangement. The detectors comprise antennae coupled high temperature superconductor weak links, in particular C-axis cross-over or step microbridges.

SUMMARY OF INVENTION

The invention is defined by the appended claims.

According to at least one aspect of the present invention, an optical system is provided comprising a solid immersion lens including a first surface and a second surface; and

a focal plane array comprising a plurality of pixels, wherein each pixel of the plurality of pixels includes at least one photosensor configured to detect incident light, and each photosensor includes a p-n junction configured to output a current indicative of an amount of light incident on the p-n junction, and wherein the current output by each photosensor is provided to a computing device configured to interpret the output currents and determine an image indicated by the output currents, the focal plane array being configured to be in optical contact with the first surface of the solid immersion lens, and wherein each pixel of the plurality of pixels is configured to have a size of less than a vacuum wavelength of infrared radiation incident on the solid immersion lens. The first surface may bea planar surface and the second surface may be a non-planar surface. The solid immersion lens may be an aspherical lens.

The solid immersion lens may be one of a conic lens and a high-order polynomial lens. The focal plane array may include a planar surface, and the plurality of pixels may be arranged on the surface of the focal plane array. The planar surface of the focal plane array may be configured to be in optical contact with the first surface of the solid immersion lens.

The system may include a lens configured to provide the electromagnetic radiation to the solid immersion lens. The size of each pixel of the plurality of pixels may be equivalent to the vacuum wavelength of the electromagnetic radiation divided by an index of refraction of the lens. Each pixel of the plurality of pixels may be configured to minimize a dark current.

The present invention further provides a method of detecting light with an optical system, the method comprising receiving incident light at an aperture; and directing the incident light to the optical system including a solid immersion lens having a first surface and a second surface, and a focal plane array having a plurality of pixels, wherein each pixel of the plurality of pixels includes at least one photosensor configured to detect incident light, and each photosensor includes a p-n junction configured to output a current indicative of an amount of light incident on the p-n junction, and wherein the current output by each photosensor is provided to a computing device configured to interpret the output currents and determine an image indicated by the output currents, the focal plane array being configured to be in optical contact with the first surface of the solid immersion lens, and wherein each pixel of the plurality of pixels is configured to have a size of less than a vacuum wavelength of infrared radiation incident on the solid immersion lens.

The method may further include magnifying, by the solid immersion lens, the focal plane array such that an effective focal length of the optical system is decreased. The method may further include receiving the incident light at a telescope aperture. The first surface may be a planar surface and the second surface may be a non-planar surface. Directing the incident light to the optical system may include receiving, at the second surface of the solid immersion lens, the incident light, and focusing, by the solid immersion lens, the incident light on the focal plane array. The method may include minimizing, by the optical system, a dark current provided by the plurality of pixels.

Further described herein is an optical system including a lens including an aperture configured to receive incident light, and direct the incident light to a focal plane array having a plurality of pixels, and means for enabling each pixel of the plurality of pixels to detect the incident light, wherein the incident light has a spot size diameter greater than a physical size of each pixel.

The system comprises means for minimizing a dark current of the plurality of pixels. Each pixel of the plurality of pixels is configured to have a size of less than a vacuum wavelength of the incident light. The size of each pixel of the plurality of pixels may be equivalent to the vacuum wavelength of the incident light divided by an index of refraction of the lens.

BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:

FIG. 1 illustrates a top view of a focal plane array according to an embodiment;
FIG. 2 illustrates a side view of a first optical system according to an embodiment; and
FIG. 3 illustrates a schematic view of a second optical system according to an embodiment.

DETAILED DESCRIPTION

As discussed above, Focal Plane Arrays (FPAs) include an array of pixels having photosensors configured to sense light. A size of each pixel in the array of pixels may be selected according to several design considerations. For example, minimizing a size of each pixel may reduce a physical footprint and cost of the FPA, and may reduce a total dark current. Dark current, which may also be referred to as reverse-bias leakage current, generally refers to a current flowing in the FPA when no illumination is present (for example, in an idle state), and is a parameter to be considered in the sensitivity of the FPA detectors. For example, dark current may be a relevant design consideration because the associated fluctuations and noise that arise from the dark current may limit the sensitivity of the FPA for detecting small signals.

Dark current is proportional to pixel size through the relationship,

$$i_{dark} = A_{pixel} \cdot j_{dark} \qquad (1)$$

where $i_{dark}$ is the dark current in units of Amperes ($A$), $A_{pixel}$ is the pixel area in units of square meters ($m^2$), and $j_{dark}$ is the dark current density of the detector material in units of Amperes per square meter ($A/m^2$). Dark current arises from the thermal generation of electron-hole pairs and diffusion within the detector material. The rate of the generation of electron-hole pairs, and hence the value of $j_{dark}$, depends on the detector material bandgap energy (which is, in turn, related to the cut-off wavelength of the detector) and operating temperature.

Consequently, decreasing the pixel size can decrease $i_{dark}$ relative to a larger pixel size for a given value of $j_{dark}$, and allow for higher sensitivity at a given operating temperature due to reduced dark current fluctuations and noise. It would also be possible to increase the cutoff wavelength operating temperature of a detector, resulting in a larger value of $j_{dark}$, while maintaining the same value of $i_{dark}$ relative to a larger pixel FPA of the same material and operating temperature. Accordingly, it may be advantageous to reduce the pixel size of the FPA in order to improve imaging performance of an optical system, or to reduce the size, weight, and power of the optical system to maintain the infrared camera operating temperature.

However, the minimum size of each pixel is subject to certain physical limitations. For example, as will be appreciated by one of ordinary skill in the art, the minimum dimension of image features produced by the lens of the FPA is limited by diffraction such that a spot size of light is physically incapable of being less than a diffraction-limited minimum spot size. If the pixel area is smaller than the minimum spot size, then the incident spot may be spread out over multiple pixels. Requiring multiple pixels to sense the incident spot increases electrical noise without increasing an amount of spatial information collected, thereby lowering the Signal-to-Noise Ratio (SNR) of the system.

In one example, a Solid Immersion Lens (SIL) may be implemented to reduce the spot-size produced at the pixel below the value that can be achieved on the FPA without such a lens. The minimum spot size Full-Width-at-Half-Maximum (FWHM) of a diffraction-limited optical system specified by an f-number of the optical system, F/#, operating at a vacuum wavelength of $\lambda_0$, and immersed in a medium with refractive index n can be approximated with the Rayleigh criterion as,

$$FWHM = 1.220(F/\#)\lambda_0/n \qquad (2)$$

Accordingly, a spot size of a diffraction-limited optical system that includes an immersion lens can be n times smaller than the spot size of an equivalent optical system that does not include an immersion lens. Another consideration in reducing the size in pixels is maintaining a given field of view over the FPA while imaging with a given aperture diameter. When pixel size is decreased, the focal length of the optical system must also decrease if the same field of view is to be maintained.

However, for the purposes of signal collection, it may be advantageous to hold the aperture diameter constant so that the same signal power is collected to be focused onto the pixel elements of the array. Therefore, if the foregoing design considerations are to be observed, decreasing the pixel size while maintaining aperture diameter requires decreasing f-numbers of the optical system.

Due to tolerance sensitivity of the optical assembly, f-numbers are typically limited to the range of f/1. However, the effect of an immersion lens effectively magnifies the FPA and the FPA's individual pixels from the perspective of the incident light without increasing the physical size of the FPA. Consequently, the optical system overall can be built with an f-number below 1, scaled by the refractive index of the SIL, without requiring significantly higher manufacturing tolerances. By addressing the lower limitations on FPA pixel size, the FPA may be smaller and more cost-efficient, and suffer less dark current, while still being capable of sensing a minimum diffraction-limited spot size. Moreover, because the size of each constituent pixel of the FPA may be reduced, the size of the FPA as a whole may be reduced. Embodiments disclosed herein provide systems and methods for achieving an FPA with reduced cost, physical footprint, and dark current while providing decreased focal lengths to achieve the field of view of systems which do not include a SIL.

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are no intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

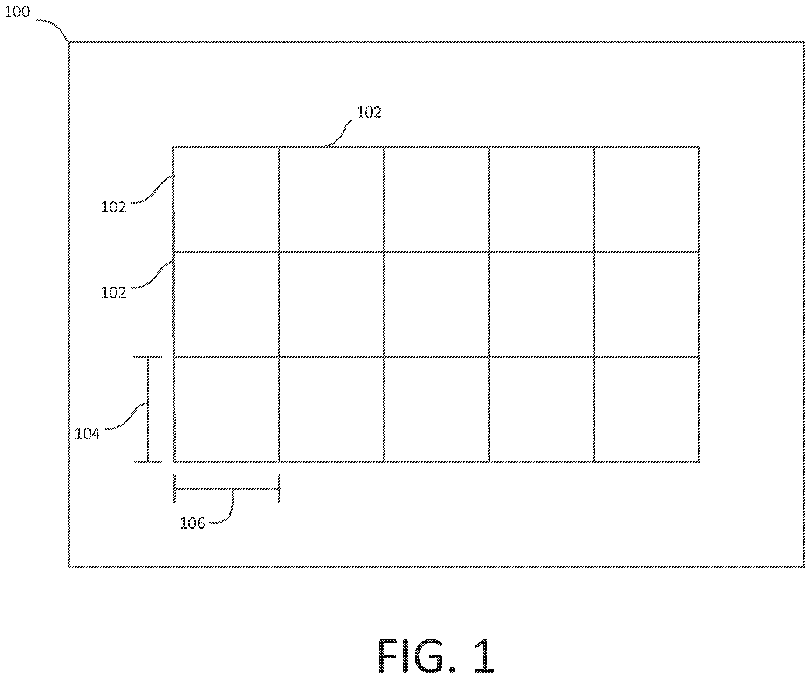

FIG. 1 illustrates a top view of an FPA 100 according to an embodiment. The FPA includes a plurality of pixels, each indicated at 102. Each pixel 102 of the plurality of pixels has a length measurement 104 and a width measurement 106. An area of each pixel 102 of the plurality of pixels is approximately equal to the product of the length measurement 104 and the width measurement 106. In one embodiment, the length measurement 104 is roughly equivalent to the width measurement 106. Accordingly, a "size" of the pixel as used herein may refer to either the length measurement 104 or the width measurement 106 where the length measurement 104 is roughly equivalent to the width measurement 106. For example, in a first implementation, the length measurement 104 and the width measurement 106 may each be approximately $12\mu m$, and each pixel 102 of the plurality of pixels may be considered to have a size of $12\mu m$.

Each pixel 102 of the plurality of pixels includes at least one photosensor configured to detect incident light. Each photosensor includes a p-n junction configured to output a current indicative of an amount of light incident on the p-n junction. The current output by each photosensor is provided to a computing device configured to interpret the output currents and determine an image indicated by the output currents. For example, the computing device may include a controller, as discussed in greater detail below.

As discussed above, pixel size may be limited by a diffraction limit of incident light. In some examples, it may be disadvantageous to detect incident light with pixels having an area significantly smaller than the smallest spot size of incident light, because an incident image will be oversampled across multiple pixels, thereby reducing the SNR. For example, continuing with the foregoing example, a pixel 102 having a size below the minimum wavelength of light in the image increasingly oversamples the image produced by diffraction-limited optical systems without an immersion lens. Accordingly, embodiments disclosed herein enable the detection of light with pixels 102 having a physical size that is less than the spot size diameter of incident light while maintaining full or near-full detection of the incident light.

It is to be appreciated that, although the plurality of pixels includes square pixels 102, the plurality of pixels may be configured according to alternate configurations. For example, each pixel 102 of the plurality of pixels may be configured in a rectangular or circular configuration, or any other configuration. Furthermore, although the pixels 102 of the plurality of pixels are identical, in alternate embodiments, the plurality of pixels may include different types of pixels. The plurality of pixels may further include any number of pixels 102, and is not intended to be limited to the illustrated number of pixels. For example, in some embodiments, the FPA 100 may be configured to have 240 rows of pixels and 320 columns of pixels.

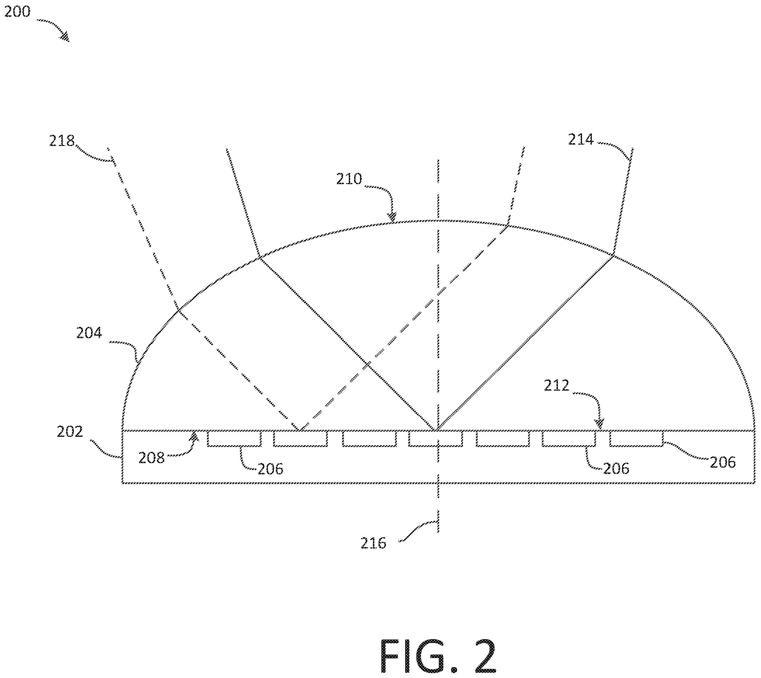

FIG. 2 illustrates a side view of an optical system 200 according to an embodiment. The optical system 200 includes an FPA 202 and an SIL 204. The FPA 202 includes a plurality of pixels, each indicated at 206, positioned along an array surface 208 of the FPA 202 such that light incident on the array surface 208 of the FPA 202 is at least partially incident on the pixels 206. The SIL 204 includes a top surface 210 and a bottom surface 212. In at least one embodiment, the array surface 208 of the FPA 202 is configured to be in optical contact with the bottom surface 212 of the SIL 204. As used herein, "optical contact" means that the array surface 208 directly contacts the bottom surface 212, or the distance between the array surface 208 and the bottom surface 212 is sufficiently small compared to the wavelength of light such that the spot size does not spread out, as occurs in connection with frustrated total internal reflection.

The SIL 204 is generally configured to receive incident light on the top surface 210 of the SIL 204, focus the incident light, and provide the focused light to the bottom surface 212 of the SIL 204. As discussed above, the bottom surface 212 of the SIL 204 may be in optical contact with the array surface 208 of the FPA 202. Accordingly, the SIL 204 may provide the focused light to the pixels 206. From the perspective of the incident light, the FPA 202 and the pixels 206 appear magnified. The implementation of the SIL 204 therefore enables the FPA 202 to be implemented with smaller pixels without changing the apparent pixel size from the perspective of the incident light.

In at least one embodiment, the SIL 204 is an aspherical lens configured to focus light which is incident on the top surface 210, and provide the focused light to the pixels 206 via the bottom surface 212, thereby magnifying the pixels 206. The top surface 210 of the SIL 204 may be a curved surface, and the bottom surface 212 of the SIL 204 may be a planar surface. The SIL 204 may be one of several aspherical shapes. For example, the SIL 204 may be configured in a conic shape, a high-order polynomial shape, or another aspherical shape. In alternate embodiments, the SIL 204 may be implemented with a spherical shape.

As will be appreciated by one of ordinary skill in the art, implementation of an aspherical lens may advantageously correct optical aberrations in off-axis images. As used herein, the term "off-axis images" may refer to images which are focused off of an optical axis of the SIL 204, and "on-axis images" may refer to images which are focused on the optical axis of the SIL 204. For example, a first image 214 may be an on-axis image focused on an optical axis 216 of the SIL 204, and the second image 218 may be an off-axis image focused off of the optical axis 216 of the SIL 204.

The SIL 204 is configured to receive infrared light, the SIL 204 is formed from germanium or silicon. The material forming the SIL 204 may be selected to reduce the diffraction-limited spot size of light incident on the top surface 210 of the SIL 204. For example, if $\lambda_0$ is the vacuum optical wavelength (outside of the lens), and $\lambda_{eff}$ is the wavelength inside of the SIL medium, the material may be selected to have an index of refraction n which decreases the optical wavelength at the array surface 208 of the FPA 202, where $\lambda_{eff} = \frac{\lambda_0}{n}$. In at least one example, the SIL 204 is composed of a material having an index of refraction within a range of approximately 1.4-4.6.

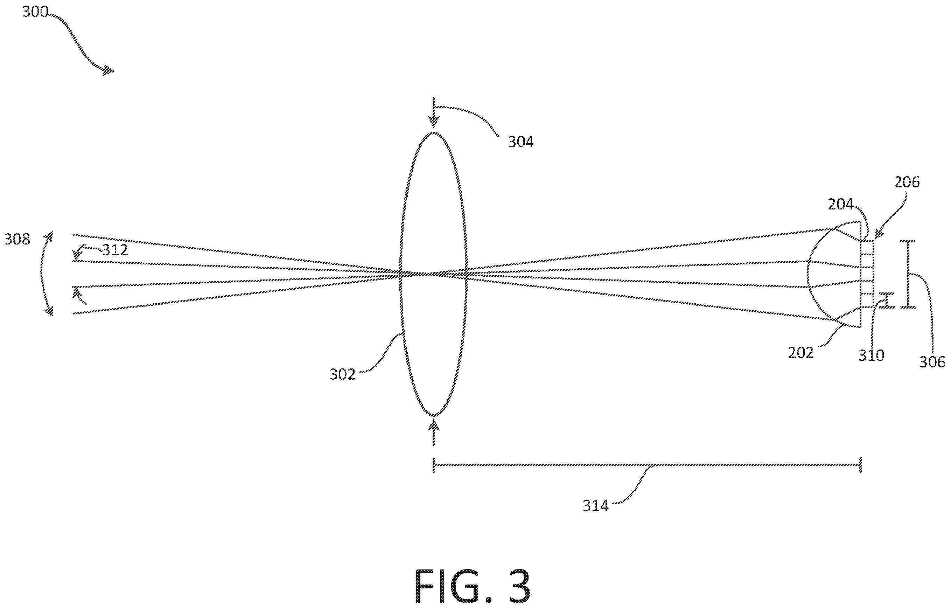

FIG. 3 illustrates a schematic view of an optical system 300 according to an embodiment. The system 300 includes an aperture 302, the SIL 202, and the FPA 204. For example, the aperture 302 may be a lens aperture of a telescope or other optical instrument. The SIL 202 and the FPA 204 may be in optical contact with each other, as discussed above.

The aperture 302 has an aperture diameter 304, hereinafter referred to as $D_{aperture}$. The FPA 204 has a size measurement 306, hereinafter referred to as the FPA size $d'_{FPA}$, and is configured to receive incident light having a field of view 308, hereinafter referred to as *FOV* Each pixel 206 of the pixels has an individual size measurement 310, hereinafter referred to as a pixel size $d'_{pixel}$, and is configured to receive incident light having an instantaneous field of view 312, hereinafter referred to as *IFOV*. In at least one example, the FPA size is approximately equal to the pixel size $d'_{pixel}$ multiplied by the number of adjacent pixels in the dimension in which the size measurement 306 is measured. The aperture 302 is displaced from the FPA 204 by a focal length 314 measured from the center of the aperture 302 to the FPA 204, hereinafter referred to as *f'*.

The relationships of the foregoing parameters may be represented as follows:

$$FOV \cong tan(\frac{nd'_{FPA}}{f'}) \qquad\qquad (3)$$

$$IFOV \cong tan(\frac{nd'_{pixel}}{f'}) \qquad\qquad (4)$$

$$F/\# = f'/D_{aperture} \qquad (5)$$

$$q = \frac{d'_{Airy}}{d'_{pixel}} \qquad (6)$$

where $n$ is an index of refraction of the SIL 202, F/# is the F-number of the optical system 300, $q$ is a pixel sampling parameter, and $d'_{Airy}$ is a diameter of an Airy disc. As will be appreciated by one of ordinary skill in the art, the diameter of the Airy disc $d'_{Airy}$ is indicative of a minimum spot diameter achievable due to the diffraction limit of light. The pixel sampling parameter q is indicative of a ratio of the diameter of the minimum spot size to the size of the pixel.

As illustrated by FIG. 3, the SIL 202 effectively magnifies the FPA 204 such that the effective *FOV* of the optical system 300 is increased. Accordingly, light incident on the SIL 202 from the aperture 302 is focused by the SIL 202 on the FPA 204 such that the FPA 204 appears magnified from the perspective of the incident light. In at least one example, the degree of magnification by the SIL 202 is dependent upon the index of refraction n of the SIL 202 pursuant to Equations (3) and (4).

For example, in a first implementation, the SIL 202 has an index of refraction n of 1.5. Each pixel 206 of the pixels has a pixel size $d'_{pixel}$ of 12μm. The focal length *f'* between the aperture 302 and the FPA 204 is approximately 3.5 inches. Applying Equation (4), the instantaneous field of view *IFOV,* indicative of a field of view of an individual pixel 206 of the pixels, is approximately 0.0116 degrees.

In a second implementation, the SIL 202 has an index of refraction n of 4.3, and the parameters $d'_{pixel}$ and *f'* remain unchanged. Applying Equation (4), the instantaneous field of view *IFOV* is approximately 0.034 degrees. Accordingly, it is to be appreciated that increasing the index of refraction n of the SIL 202 proportionally increases the instantaneous field of view *IFOV* of each pixel 206 of the pixels, and correspondingly the field of view *FOV,* thereby magnifying each pixel to incident light without physically increasing the size of each pixel.

Enabling modulation of the instantaneous field of view *IFOV* by modulating the index of refraction *n* of the SIL 202 provides increased flexibility in designing the optical system 300. For example, in some conventional systems, increasing the instantaneous field of view *IFOV* might be achieved by decreasing the F-number *F/#* of the conventional system. Pursuant to Equation (5), decreasing the F-number *F/#* may include reducing the focal length *f'*, which yields an increase in the instantaneous field of view *IFOV* pursuant to Equation (4). However, reducing the F-number *F/#* of an optical system may be expensive, whereas providing the SIL 202 and increasing the index of refraction n of the SIL 202 may be less expensive. Accordingly, the implementation and configuration of SIL 202 may enable a more cost-efficient method of increasing the instantaneous field of view *IFOV* and minimizing a pixel size $d'_{pixel}$ without changing the F-number *F/#*.

In light of the foregoing, the optical system 300 enables smaller pixels to be implemented in an optical system, without compromising a field of view *FOV* of the optical system 200. The FPA 204 may be implemented with a same number of pixels as an FPA not implemented in connection with the SIL 202, thereby yielding a more compact FPA. Furthermore, reducing the size of the FPA while maintaining the same number of pixels is more affordable because less material is necessary to construct the smaller FPA. Alternatively, the FPA 204 may be implemented with a larger number of pixels to increase the field of view *FOV,* reduce the instantaneous field of view *IFOV,* or accomplish both by adjusting the focal length *f'*, because more of the smaller pixels may be implemented on a wafer of a given size.

As discussed above, embodiments disclosed herein may enable a dark current to be minimized. For example, pixels of an FPA (for example, the FPA 100 or the FPA 202) may each respectively include a p-n junction configured to generate a current responsive to receiving incident light. The dark current generated within a p-n junction is proportional to the area of the p-n junction. A larger p-n junction is therefore subject to a higher dark current, which causes additional background noise. Accordingly, reducing the area of the pixels of the FPA enables reduction of the p-n junction area, which correspondingly reduces an amount of dark current produced by the p-n junction and lowers background noise.

A reduction in dark current enables a higher SNR by reducing the background noise caused by the dark current. Conventional optical systems may include cooling systems configured to enable a higher SNR by cooling the FPAs. For example, the cooling systems may be configured to cryogenically cool FPAs by providing a flow of cryogenically cooled gas across the FPAs. By mitigating the effects of background noise with the implementation of smaller pixels, less cooling may be necessary to improve the SNR, which may enable the cooling system to be reduced in size and power requirements, or removed entirely. Alternatively, the cooling system may not be altered, thereby maintaining a higher SNR.

Examples disclosed herein are not intended to be limiting. For example, in alternate implementations, the FPAs 100 and 202 may be implemented according to any arrangement of pixels. For example, the FPAs 100 and 202 may be implemented having any number of pixels arranged in any number of rows and columns, wherein the pixels may be individually shaped in any configuration.

As discussed above, the FPA 100 may be coupled to a computing device configured to analyze current generated by the plurality of pixels 102. The FPA 202 may similarly be coupled to a computing device configured to analyze current generated by the pixels 206. For example, the computing device may include a controller. The controller may control certain aspects of the FPA 100. Using data stored in associated memory, the controller may also execute one or more instructions stored on one or more non-transitory computer-readable media that may result in manipulated data. In some examples, the controller may include one or more processors or other types of controllers. In one example, the controller performs a portion of the functions disclosed herein on a processor and performs another portion using an Application-Specific Integrated Circuit (ASIC) tailored to perform particular operations. As illustrated by these examples, examples in accordance with the present invention may perform the operations described herein using many specific combinations of hardware and software and the invention is not limited to any particular combination of hardware and software components.

An optical system including an SIL and an FPA has been described. The optical system described may be particularly effective in connection with infrared FPAs, or optical detectors requiring high sensitivity or very fast (i.e., low F-number) collection optics. The optical system enables spot sizes to be reduced to below the wavelength of light measured outside of the SIL medium, which may be performed continuously across the entire FPA. The optical system allows for smaller pixel pitches, at least because a footprint of an incident image is reduced by the SIL, which reduces the pixel area and, correspondingly, the dark current. The optical system further enables a lens F-number to be reduced by a factor of up to the square of the refractive index of the SIL, thereby improving the optical system's sensitivity.

Having thus described several aspects of at least one embodiment, it is to be appreciated various alterations, modifications, and improvements will readily occur to those skilled in the art.

The foregoing description and drawings are by way of example only.

**Claims**

1. An optical system (200, 300) comprising:

   a solid immersion lens (204) formed from germanium or silicon and being configured to receive infrared light, including a first surface (212) and a second surface (210); and
   a focal plane array (202) comprising a plurality of pixels (102), wherein each pixel (102) of the plurality of pixels includes at least one photosensor configured to detect incident infrared light received by the solid immersion lens, light, and each photosensor includes a p-n junction configured to output a current indicative of an amount of light incident on the p-n junction, and wherein
   the optical system further comprising a computing device,
   the current output by each photosensor is provided to the computing device configured to interpret the output currents and determine an image indicated by the output currents, the focal plane array being configured to be in optical contact with the first surface (212) of the solid immersion lens, and wherein each pixel of the plurality of pixels is configured to have a size of less than a vacuum wavelength of the infrared light received by the the solid immersion lens;
   wherein the focal plane array (202) comprises that the array surface (208) which directly contacts the first surface (212) of the solid immersion lens, or the distance between the array surface (208) and the first surface (212) of the solid immersion lens is sufficiently small compared to the wavelength of light such that the spot size does not spread out, as occurs in connection with frustrated total internal reflection.

2. The optical system of claim 1, wherein the first surface (212) is a planar surface and the second surface (210) is a non-planar surface.

3. The optical system of claim 2, wherein the solid immersion lens (204) is an aspherical lens.

4. The optical system of claim 3, wherein the solid immersion lens (204) is one of a conic lens and a high-order polynomial lens.

5. The optical system of claim 2, wherein the focal plane array (202) includes a planar surface, and wherein the plurality of pixels (102) is arranged on the surface of the focal plane array.

6. The optical system of claim 5, wherein the planar surface of the focal plane array (202) is configured to be in optical contact with the first surface (212) of the solid immersion lens (204).

7. The optical system of claim 1, further comprising a lens configured to provide the infrared radiation to the solid immersion lens.

8. The optical system of claim 7, wherein the size of each pixel (102) of the plurality of pixels is equivalent to the vacuum wavelength of the infrared radiation divided by an index of refraction of the lens.

9. A method of detecting light with an optical system, the method comprising:

receiving incident light at an aperture (302); and
directing the incident light to the optical system including a solid immersion lens (204) formed from germanium or silicon and being configured to receive infrared light, having a first surface (212) and a second surface (210), and a focal plane array (202) having a plurality of pixels (102), wherein each pixel (102) of the plurality of pixels includes at least one photosensor configured to detect incident infrared light received by the solid immersion lens, and each photosensor includes a p-n junction configured to output a current indicative of an amount of light incident on the p-n junction, and wherein the current output by each photosensor is provided to a computing device configured to interpret the output currents and determine an image indicated by the output currents, the focal plane array (202) being configured to be in optical contact with the first surface (212) of the solid immersion lens (204), and wherein each pixel of the plurality of pixels (102) is configured to have a size of less than a vacuum wavelength of the infrared light received by the the solid immersion lens lens (204);
wherein the focal plane array (202) comprises that the array surface (208) which directly contacts the first surface (212) of the solid immersion lens, or the distance between the array surface (208) and he first surface (212) of the solid immersion lens is sufficiently small compared to the wavelength of light such that the spot size does not spread out, as occurs in connection with frustrated total internal reflection.

10. The method of claim 9, further comprising magnifying, by the solid immersion lens (204), the focal plane array (202) such that an effective focal length of the optical system is decreased.

11. The method of claim 9, further comprising receiving the incident light at a telescope aperture (302).

12. The method of claim 9, wherein the first surface (212) is a planar surface and the second surface (210) is a non-planar surface.

13. The method of claim 12, wherein directing the incident light to the optical system includes:

receiving, at the second surface (210) of the solid immersion lens, the incident light; and
focusing, by the solid immersion lens (204), the incident light on the focal plane array (202).

**Patentansprüche**

1. Optisches System (200, 300), Folgendes umfassend:

eine Festkörperimmersionslinse (204), die aus Germanium oder Silizium ausgebildet ist und eingerichtet ist, um infrarotes Licht zu empfangen, eine erste Oberfläche (212) und eine zweite Oberfläche (210) umfassend; und
eine Brennebenenanordnung (202), mehrere Pixel (102) umfassend, wobei jeder Pixel (102) der mehreren Pixel mindestens einen Fotosensor umfasst, der eingerichtet ist, um einfallendes infrarotes Licht zu detektieren, das von der Festkörperimmersionslinse empfangen wird, und jeder Fotosensor einen p-n-Übergang umfasst, der eingerichtet ist, um einen Strom auszugeben, der für eine Lichtmenge bezeichnend ist, die auf den p-n-Übergang fällt, und wobei das optische System weiterhin eine Datenverarbeitungsvorrichtung umfasst, die Stromflussausgabe von jedem Fotosensor der Datenverarbeitungsvorrichtung bereitgestellt wird, die eingerichtet ist, um die Ausgabeströme zu interpretieren und ein Bild zu bestimmen, das durch die Ausgabeströme angegeben wird, wobei die Brennebenenanordnung eingerichtet ist, um im optischen Kontakt mit der ersten Oberfläche (212) der Festkörperimmersionslinse zu stehen, und wobei jeder Pixel der mehreren Pixel eingerichtet ist, um eine kleinere Größe als eine Vakuumwellenlänge des infraroten Lichts aufzuweisen, das von der Festkörperimmersionslinse empfangen wird; wobei die Brennebenenanordnung (202) umfasst, dass die Anordnungsoberfläche (208) die erste Oberfläche (212) der Festkörperimmersionslinse unmittelbar kontaktiert oder der Abstand zwischen der Anordnungsoberfläche (208) und der ersten Oberfläche (212) der Festkörperimmersionslinse verglichen mit der Lichtwellenlänge ausreichend klein ist, so dass sich die Fleckgröße nicht ausbreitet, wie dies im Zusammenhang mit abgeschwächter Totalreflexion auftritt.

2. Optisches System nach Anspruch 1, wobei die erste Oberfläche (212) eine planare Oberfläche ist und die zweite Oberfläche (210) eine nichtplanare Oberfläche ist.

3. Optisches System nach Anspruch 2, wobei die Festkörperimmersionslinse (204) eine asphärische Linse ist.

4. Optisches System nach Anspruch 3, wobei die Festkörperimmersionslinse (204) eine von einer konischen Linse und einer Polynomlinse hoher Ordnung ist.

5. Optisches System nach Anspruch 2, wobei die Brennebenenanordnung (202) eine planare Oberfläche umfasst und wobei die mehreren Pixel (102) auf der Oberfläche der Brennebenenanordnung angeordnet sind.

6. Optisches System nach Anspruch 5, wobei die planare Oberfläche der Brennebenenanordnung (202) eingerichtet ist, um im optischen Kontakt mit der ersten Oberfläche (212) der Festkörperimmersionslinse (204) zu stehen.

7. Optisches System nach Anspruch 1, weiterhin eine Linse umfassend, die eingerichtet ist, um die infrarote Strahlung der Festkörperimmersionslinse bereitzustellen.

8. Optisches System nach Anspruch 7, wobei die Größe jedes Pixels (102) der mehreren Pixel der Vakuumwellenlänge der infraroten Strahlung, geteilt durch einen Brechungsindex der Linse, äquivalent ist.

9. Verfahren zum Detektieren von Licht mit einem optischen System, das Verfahren Folgendes umfassend:

Empfangen von einfallendem Licht an einer Blende (302); und
Richten des einfallenden Lichts auf das optische System, das eine Festkörperimmersionslinse (204), die aus Germanium oder Silizium ausgebildet ist und die eingerichtet ist, um infrarotes Licht zu empfangen, die eine erste Oberfläche (212) und eine zweite Oberfläche (210) aufweist, und eine Brennebenenanordnung (202) mit mehreren Pixeln (102) umfasst, wobei jeder Pixel (102) der mehreren Pixel mindestens einen Fotosensor umfasst, der eingerichtet ist, um einfallendes infrarotes Licht zu detektieren, das von der Festkörperimmersionslinse empfangen wird, und jeder Fotosensor einen p-n-Übergang umfasst, der eingerichtet ist, um einen Strom auszugeben, der für eine Lichtmenge bezeichnend ist, die auf den p-n-Übergang fällt, und wobei die Stromflussausgabe durch jeden Fotosensor einer Datenverarbeitungsvorrichtung bereitgestellt wird, die eingerichtet ist, um die Ausgabeströme zu interpretieren und ein Bild zu bestimmen, das durch die Ausgabeströme angegeben wird, wobei die Brennebenenanordnung (202) eingerichtet ist, um im optischen Kontakt mit der ersten Oberfläche (212) der Festkörperimmersionslinse (204) zu stehen, und wobei jeder Pixel der mehreren Pixel (102) eingerichtet ist, um eine kleinere Größe als eine Vakuumwellenlänge des infraroten Lichts aufzuweisen, das von der Festkörperimmersionslinse (204) empfangen wird; wobei die Brennebenenanordnung (202) umfasst, dass die Anordnungsoberfläche (208) die erste Oberfläche (212) der Festkörperimmersionslinse unmittelbar kontaktiert oder der Abstand zwischen der Anordnungsoberfläche (208) und der ersten Oberfläche (212) der Festkörperimmersionslinse verglichen mit der Lichtwellenlänge ausreichend klein ist, so dass sich die Fleckgröße nicht ausbreitet, wie dies im Zusammenhang mit abgeschwächter Totalreflexion auftritt.

10. Verfahren nach Anspruch 9, weiterhin Vergrößern, durch die Festkörperimmersionslinse (204), der Brennebenenanordnung (202) umfassend, so dass eine wirksame Brennweite des optischen Systems vermindert wird.

11. Verfahren nach Anspruch 9, weiterhin Empfangen des einfallenden Lichts an einer Teleskopblende (302) umfassend.

12. Verfahren nach Anspruch 9, wobei die erste Oberfläche (212) eine planare Oberfläche ist und die zweite Oberfläche (210) eine nichtplanare Oberfläche ist.

13. Verfahren nach Anspruch 12, wobei Richten des einfallenden Lichts auf das optische System Folgendes umfasst:

Empfangen, auf der zweiten Oberfläche (210) der Festkörperimmersionslinse, des einfallenden Lichts; und
Fokussieren, durch die Festkörperimmersionslinse (204), des einfallenden Lichts auf die Brennebenenanordnung (202).

**Revendications**

1. Système optique (200, 300) comprenant :

    une lentille à immersion solide (204) formée à partir de germanium ou de silicium et configurée pour recevoir la lumière infrarouge, comprenant une première surface (212) et une seconde surface (210) ; et un vidéo-détecteur réseau (202) comprenant une pluralité de pixels (102), chaque pixel (102) de la pluralité de pixels comprenant au moins un photocapteur configuré pour détecter la lumière infrarouge incidente reçue par la lentille à immersion solide, et chaque photocapteur comprenant une jonction p-n configurée pour émettre un courant indicatif d'une quantité de lumière incidente sur la jonction p-n, et le système optique comprenant en outre un dispositif informatique, le courant émis par chaque photocapteur étant fourni au dispositif informatique configuré pour interpréter les courants de sortie et déterminer une image indiquée par les courants de sortie, le vidéo-détecteur réseau étant configuré pour être en contact optique avec la première surface (212) de la lentille à immersion solide, et chaque pixel de la pluralité de pixels étant configuré pour avoir une taille inférieure à une longueur d'onde dans le vide de la lumière infrarouge reçue par la lentille à immersion solide ; le vidéo-détecteur réseau (202) comprenant la surface de réseau (208) qui entre directement en contact avec la première surface (212) de la lentille à immersion solide, ou la distance entre la surface de réseau (208) et la première surface (212) de la lentille à immersion solide étant suffisamment petite par rapport à la longueur d'onde de la lumière pour que la taille de la tache ne s'étale pas, comme cela se produit en relation avec la réflexion interne totale frustrée.

2. Système optique selon la revendication 1, la première surface (212) étant une surface plane et la seconde surface (210) étant une surface non plane.

3. Système optique selon la revendication 2, la lentille à immersion solide (204) étant une lentille asphérique.

4. Système optique selon la revendication 3, la lentille à immersion solide (204) étant une lentille conique ou une lentille polynomiale d'ordre élevé.

5. Système optique selon la revendication 2, le vidéo-détecteur réseau (202) comprenant une surface plane, et la pluralité de pixels (102) étant disposée sur la surface du vidéo-détecteur réseau.

6. Système optique selon la revendication 5, la surface plane du vidéo-détecteur réseau (202) étant configurée pour être en contact optique avec la première surface (212) de la lentille à immersion solide (204).

7. Système optique selon la revendication 1, comprenant en outre une lentille configurée pour fournir le rayonnement infrarouge à la lentille à immersion solide.

8. Système optique selon la revendication 7, la taille de chaque pixel (102) de la pluralité de pixels étant équivalente à la longueur d'onde dans le vide du rayonnement infrarouge divisée par un indice de réfraction de la lentille.

9. Procédé de détection de la lumière avec un système optique, le procédé comprenant :

    la réception de la lumière incidente au niveau d'une ouverture (302) ; et l'orientation de la lumière incidente vers le système optique comprenant une lentille à immersion solide (204) formée de germanium ou de silicium et configurée pour recevoir la lumière infrarouge, ayant une première surface (212) et une seconde surface (210), et un vidéo-détecteur réseau (202) ayant une pluralité de pixels (102), chaque pixel (102) de la pluralité de pixels comprenant au moins un photocapteur configuré pour détecter la lumière infrarouge incidente reçue par la lentille à immersion solide, et chaque photocapteur comprenant une jonction p-n configurée pour émettre un courant indiquant une quantité de lumière incidente sur la jonction p-n, et le courant émis par chaque photocapteur étant fourni à un dispositif informatique configuré pour interpréter les courants de sortie et déterminer une image indiquée par les courants de sortie, le vidéo-détecteur réseau (202) étant configuré pour être en contact optique avec la première surface (212) de la lentille à immersion solide (204), et chaque pixel de la pluralité de pixels (102) étant configuré pour avoir une taille inférieure à une longueur d'onde dans le vide de la lumière infrarouge reçue par la lentille à immersion solide (204) ; le vidéo-détecteur réseau (202) comprenant que la surface de réseau (208) qui entre directement en contact avec la première surface (212) de la lentille à immersion solide, ou la distance entre la surface de réseau (208) et la première surface (212) de la lentille à immersion solide soit suffisamment petite par rapport à la longueur d'onde de la lumière pour que la taille du spot ne s'étale pas, comme cela se produit dans le cas de la réflexion interne totale frustrée.

10. Procédé selon la revendication 9, comprenant en outre le grossissement, par la lentille à immersion solide (204), du vidéo-détecteur réseau (202) de sorte qu'une longueur focale effective du système optique est diminuée.

11. Procédé selon la revendication 9, comprenant en outre la réception de la lumière incidente à une ouverture de télescope (302).

12. Procédé selon la revendication 9, la première surface (212) étant une surface plane et la seconde surface (210) étant une surface non plane.

13. Procédé selon la revendication 12, l'orientation de la lumière incidente vers le système optique comprenant :

la réception, sur la seconde surface (210) de la lentille à immersion solide, de la lumière incidente ; et
la focalisation, par la lentille à immersion solide (204), de la lumière incidente sur le vidéo-détecteur réseau (202).

FIG. 1

EP 3 844 534 B1

FIG. 2

EP 3 844 534 B1

FIG. 3

EP 3 844 534 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004130311 A1